# EUROPÄISCHE PATENTSCHRIFT

(11) **EP 1 385 899 B1**
(45) Veröffentlichungstag und Bekanntmachung des Hinweises auf die Patenterteilung: **21.02.2007**
(21) Anmeldenummer: 02745241.6
(22) Anmeldetag: 19.04.2002
(51) Int. Cl.: C08J 5/18, C08L 67/04

(54) **OPAKE FOLIE AUS POLYMILCHSÄUREN**
OPAQUE FILM MADE OF POLYLACTIC ACIDS
FILM OPAQUE EN ACIDES POLYLACTIQUES

(30) Priorität: 30.04.2001 DE 10121150
(43) Veröffentlichungstag der Anmeldung: 04.02.2004
(73) Patentinhaber: Treofan Germany GmbH & Co.KG, 66539 Neunkirchen (DE)
(72) Erfinder: ROSENBAUM, Sonja, "deceased" (DE); HÄDE, Petra, 66117 Saarbrücken (DE); BUSCH, Detlef, 66740 Saarlouis (DE); KOCHEM, Karl-Heinz, 66539 Neunkirchen (DE); ROSENBAUM, Marlies, 66539 Bous (DE); ROSENBAUM, Manfred, 66539 Bous (DE)
(86) Internationale Anmeldenummer: PCT/EP2002/004324
(87) Internationale Veröffentlichungsnummer: WO 2002/088230

(56) Entgegenhaltungen:
- EP-A- 1 068 949
- DE-A- 19 811 773

## Beschreibung

Die vorliegende Erfindung betrifft eine opake, biaxial orientierte PHC-Folie, die mindestens eine Schicht umfasst, welche Polymeres auf Basis von Hydroxycarbonsäuren und ein Cycloolefincopolymer (COC) enthält. Die Erfindung betrifft femer ein Verfahren zur Herstellung der PHC-Folie sowie ihre Verwendung.

Opake biaxial orientierte Folien sind im Stand der Technik bekannt. Diese Folien zeichnen sich durch eine glänzende perlmuttartige Optik aus, welche für gewisse Anwendungszwecke erwünscht ist. Zusätzlich haben derartige Folien eine reduzierte Dichte die dem Anwender eine erhöhte Ausbeute ermöglicht.

EP 1 068 949 eine weisse, biaxial orientierte Polyesterfolie mit mindestens einer Schicht, welche ein Cycloolefincopolymeres (COC) in einer Konzentration von 2 bis 60 Gew.-%, bezogen auf diese Schicht enthält. Die Glasübergangstemperatur des Cycloolefincopolymeren (COC) im Bereich von 70 bis 270 DEG C liegt. Der Polyester ist ein aromatischer Polyester. Es ist beschrieben, daß das COC Vakuolen in der Polyesterfolie erzeugt.

DE 198 11 773 beschreibt eine biaxial orientierte, opake, biologisch abbaubare und kompostierbare Folie mit anorganischen Füllstoffen, sowie mit maximal 5 Gew.-% Nukleierungsmitteln und maximal 5 Gew.-% der üblichen Stabilisatoren und Neutralisationsmittel und maximal 5 Gew.-% der üblichen Gleit- und Trennmittel sowie maximal 5 Gew.-% der üblichen Antiblockmittel enthält. Dabei können auch die Nukleierungsmittel oder Antiblockmittel zu den anorganischen Füllstoffen zählen und ebenfalls eine opake Oberfläche erzeugen. Die Dichte dieser Folie ist nicht reduziert.

Die Aufgabe der vorliegenden Erfindung bestand darin, umweltfreundliche Verpackungen zur Verfügung zu stellen, welche zum einen aus nachwachsenden Rohstoffen hergestellt werden können und zum anderen umweltfreundlich entsorgt werden können. Darüber hinaus soll die Folie ein opakes Aussehen aufweisen und eine Dichte unter 1,25 g/cm³ aufweisen.

Die Aufgabe wird gelöst durch eine opake, biaxial orientierte Folie mit mindestens einer Schicht, deren kennzeichnende Merkmale darin bestehen, dass diese Schicht mindestens ein Polymeres I aus mindestens einer **aliphatischen** Hydroxycarbonsäure (PHC) und 0,5 bis 30 Gew-%, bezogen auf die Schicht ein Cycloolefincopolymeres (COC)mit einer Glasübergangstemperatur im Bereich von 70 bis 270 °C enthält, **wobei die Folie vakuolenartige Hohlräume und eine Dichte von weniger als 1,25g/cm³ aufweist.**

Unter einer opaken, biaxial orientierten PHC-Folie wird im Sinne der vorliegenden Erfindung eine Folie bezeichnet, die einen Weißgrad von mindestens 10 %, bevorzugt von mehr als 20 % und eine Opazität von mehr als 20 %, bevorzugt mehr als 25 % aufweist. Im allgemeinen beträgt die Lichtdurchlässigkeit nach ASTM-D 1003-77 solcher opaken Folien weniger 95 %, vorzugsweise weniger als 75 %.

Zum Erzielen der gewünschten Optik und der reduzierten Dichte muss der Anteil an Cycloolefincopolymeren (COC) in der Basisschicht grösser als 0,5 Gew.- %, bezogen auf das Gewicht der Basisschicht sein. Ist der Cycloolefincopolymer (COC)-Gehalt andererseits größer als 30 %, kann die Folie nicht umweltfreundlich entsorgt werden.

Weiterhin ist es notwendig, dass die Glasübergangstemperatur des eingesetzten Cycloolefincopolymeren (COC) grösser als 70 °C ist. Es wurde gefunden, daß mit einem COC mit einer Glasübergangstemperatur von weniger als 70°C hinsichtlich der Dichte-Reduktion der Folie und hinsichtlich der Folienoptik nicht die gewünschten Effekte erzielt werden. Andernfalls, bei einer Glasübergangstemperatur von kleiner als 70 °C, ist das Rohstoffgemisch schlecht verarbeitbar (schlecht extrudierbar), der gewünschte Weissgrad wird nicht mehr erreicht und das eingesetzte Regenerat führt zu einer Folie, die zu einer erhöhten Gelbfärbung neigt. Ist andererseits die Glasübergangstemperatur des ausgewählten Cycloolefincopolymeren (COC) grösser als 270°C, so läßt sich die Rohstoffmischung im Extruder nicht mehr ausreichend homogen dispergieren. Dies hat dann eine Folie mit inhomogenen Eigenschaften zur Folge.

In einer bevorzugten Ausführungsform der erfindungsgemässen Folie liegt die Glasübergangstemperatur der verwendeten COC's in einem Bereich von 90 bis 250°C und in der besonders bevorzugten Ausführungsform in einem Bereich von 110 bis 220°C.

Überraschender Weise wurde gefunden, dass durch den Zusatz eines Cycloolefincopolymeren (COC) in einer PHC-Polymermatrix eine opake, glänzende Folie mit einer reduzierten Dichte hergestellt werden kann.

Die erfindungsgemässe Folie ist einschichtig oder mehrschichtig aufgebaut. Einschichtige Ausführungsformen sind wie die nachstehend beschriebene COC-haltige Schicht aufgebaut. Mehrschichtige Ausführungsformen sind mindestens zweischichtig und umfassen immer die COC-haltige Schicht und zumindest eine weitere Schicht, wobei die COC-haltige Schicht die Basisschicht sein kann, gegebenenfalls kann auch die Zwischen- oder die Deckschicht der mehrschichtigen Folie die COC-haltige Schicht sein. In einer bevorzugten Ausführungsform bildet die COC-haltige Schicht die Basisschicht der Folie mit mindestens einer, vorzugsweise mit beidseitigen Deckschicht/en, wobei gegebenenfalls einseitig eine oder beidseitig Zwischenschicht/en vorhanden sein kann/können.

In einer weiteren bevorzugten Ausführungsform bildet die COC-haltige Schicht eine Zwischenschicht der Mehrschichtfolie. Weitere Ausführungsformen mit COC-haltigen Zwischenschichten sind fünfschichtig aufgebaut und haben neben einer gegebenenfalls COC-haltigen Basischicht beidseitig COC-haltige Zwischenschichten, In einer weiteren Ausführungsform kann die COC-haltige Schicht eine Deckschicht/en auf der Basis- oder der Zwischenschicht bilden. Gegebenenfalls können beide Deckschichten COC-haltig sein. Die Basisschicht ist im Sinne der vorliegenden Erfindung diejenige Schicht, welche mehr als 30 % bis 100 %, vorzugsweise 50 bis 90 %, der Gesamtfoliendicke ausmacht und die größte Schichtdicke aufweist. Die Deckschichten sind die Schichten, welche die äusseren Schichten der Folie bilden. Zwischenschichten sind naturgemäß zwischen der Basisschicht und den Deckschichten angebracht.

Die COC-haltige Schicht, welche gegebenenfalls die einzige Schicht der erfindungsgemäßen Folie ist, enthält ein Polymeres 1 aus mindestens einer Hydroxycarbonsäure, mindestens ein COC sowie gegebenenfalls weitere zugesetzte Additive in jeweils wirksamen Mengen. Im allgemeinen enthält diese Schicht mindestens 50 bis 99,5 Gew.%, vorzugsweise 60 bis 98 Gew. -%, insbesondere 70 bis 98 Gew. -%, eines Polymeren 1 aus mindestens einer Hydroxycarbonsäure, bezogen auf das Gewicht der Schicht.

Die Basisschicht der Folie enthält mindestens ein Polymeres 1 aus mindestens einer aliphatischen Hydroxycarbonsäure, nachstehend PHC (Potyhydroxycarbonsäuren) genannt, im allgemeinen in einer Menge 50 bis 99,5 Gew.-%, vorzugsweise 70 bis 95 Gew.-%. Hierunter sind Homopolymere oder Mischpolymerisate zu verstehen, welche aus polymerisierten Einheiten von, aliphatischen, Hydroxycarbonsäuren aufgebaut sind. Unter den für die vorliegende Erfindung geeigneten PHC sind insbesondere Polymilchsäuren geeignete. Diese werden nachstehend als PLA (Polylactidacid) bezeichnet. Auch hier sind unter dem Begriff sowohl Homopolymere, welche nur aus Milchsäureeinheiten aufgebaut sind, als auch Mischpolymerisate zu verstehen, welche überwiegend Milchsäureeinheiten (>50%) in Verbindungen mit anderen aliphatischen Hydroxymilchsäureeinheiten enthalten.

Als Monomere der aliphatischen Polyhydroxycarbonsäure (PHC) sind insbesondere aliphatische Mono-, Di- oder Trihydroxycarbonsäuren, bzw. deren dimere cyclische Ester geeignet, worunter Milchsäure in ihrer D- oder L-Form bevorzugt ist. Ein geeignetes PLA ist beispielsweise Polymilchsäure der Fa. Cargill Dow (NatureWorks®). Die Herstellung von Polymilchsäure ist im Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet. In den folgenden Veröffentlichungen ist die Herstellung von PLA beschrieben US 5,208,297, US 5,247,058 oder US 5,357,035.

Bevorzugt sind Polymilchsäuren, welche ausschließlich aus Milchsäureeinheiten aufgebaut sind. Hierbei sind insbesondere PLA Homopolymere bevorzugt, welche 80- 100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzlich von der Milchsäure verschiedene aliphatische Hydroxycarbonsäureeinheiten als Comonomer aufweisen, beispielsweise Glycolsäureeinheiten, 3-Hydroxypropansäureeinhaiten, 2,2-Dimethyl-3-hydroxypropansäureeinheiten oder höhere Homologe der Hydroxycarbonsäuren mit bis zu 5 Kohlenstoffatomen.

Bevorzugt sind Milchsäurepolymere (PLA) mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperatur Tg liegt in einem Bereich von 40 bis 100°C, vorzugsweise 40 bis 80°C.

Erfindungsgemäss enthält die COC-haltige Schicht bzw. die Folie bei einschichtigen Ausführungsformen, ein Cycloolefincopolymeres (COC) in einer Menge von mindestens 0,5 Gew.-%, bevorzugt 1 bis 30 Gew.-% und besonders bevorzugt 2 bis 10 Gew.-%, bezogen auf das Gewicht der Schicht bzw, bezogen auf das Gewicht der Folie bei einschichtigen Ausführungsformen.

Cycloolefinpolymere sind Homopolymerisate oder Copolymerisate, welche aus polymerisierte Cycloolefineinheiten und gegebenenfalls acyclische Olefine als Comonomer aufgebaut sind. Für die vorliegende Erfindung sind Cycloolefinpolymere geeignet, die 0,1 bis 100 Gew.-%, bevorzugt 10 bis 99 Gew.-%, besonders bevorzugt 50-95 Gew.-%, jeweils bezogen auf die Gesamtmasse des Cycloolefinpolymeren, polymerisierte Cycloolefineinheiten enthalten. Besonders geeignete Cycloolefinpolymere sind im Einzelnen und detailliert in der EP 1 068 949 beschrieben auf welche hiermit ausdrücklich Bezug genommen wird.

Unter den vorstehend beschriebenen und in der EP 1 068 949 beschrieben Cycloolefincopolymeren sind insbesondere diejenigen bevorzugt, die polymerisierte Einheiten polycyclischer Olefine mit Norbornengrundstruktur, besonders bevorzugt Norbomen oder Tetracyclododecen, enthalten. Besonders bevorzugt sind auch Cycloolefincopolymere (COC), die polymerisierte Einheiten acyclischer Olefine, insbesondere Ethylen, enthalten. Wiederum besonders bevorzugt sind Norbonen/Ethylen- und Tetracyclododecen/Ethylen-Copolymere, welche 5 bis 80 Gew.-%, vorzugsweise 10 bis 60 Gew.-% Ethylen enthalten (bezogen auf das Gewicht des Copolymeren).

Die vorstehend und in der EP 1 068 949 generisch beschriebenen CyGoolefinpolymeren weisen im allgemeinen Glasübergangstemperaturen zwischen 100 °C und 400° C auf. Für die Erfindung sind Cycloolefincopolymerisate (COC) verwendbar, die eine Glasübergangstemperatur von grösser als 70°C, vorzugsweise grösser als 90°C und insbesondere grösser als 110°C aufweisen. Die Viskositätszahl (Dekalin, 135 DEG C, DIN 53 728) liegt zweckmässiger weise zwischen 0,1 und 200 ml/g, bevorzugt zwischen 50 und 150 ml/g.

Die Herstellung der Cycloolefincopolymere (COC) geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf die in obengenannten Schriften beschriebenen Herstellungsverfahren von Cycloolefinpolymeren wird hiermit ausdrücklich Bezug genommen.

Die Cycloolefincopolymere werden entweder als reines Granulat oder als granuliertes Konzentrat (Masterbatch) in die Folie eingearbeitet, indem das Granulat aus PHC, vorzugsweise PLA, mit dem Cycloolefincopolymer (COC) bzw. dem Cycloolefincopolymer (COC)-Masterbatch vorgemischt und anschliessend dem Extruder zugeführt wird. Im Extruder werden die Komponenten weiter vermischt und auf Verarbeitungstemperatur erwärmt. Dabei ist es für das erfindungsgemässe Verfahren zweckmässig, dass die Extrusionstemperatur oberhalb der Glasübergangstemperatur Tg des Cycloolefincopolymeren (COC) liegt, im allgemeinen mindestens 10°C, vorzugsweise 15 bis 100°C, insbesondere 20 bis 150°C, über der Glasübergangstemperatur des Cycloolefincopolymeren (COC).

Die Folie weißt bevorzugt neben der COC-haltigen Schicht zusätzlich weitere Schichten auf, welche die Basisschicht, eine Zwischen- oder Deckschicht bilden können. Diese weiteren Schichten sind aus den vorstehend für die COC-haltige Schicht beschriebenen Polyhxdroxycarbonsäure (PHC) aufgebaut. Für diese weiteren Schichten sind in gleicher Weise PLA bevorzugt.

Die COC-haltige Schicht und die anderen Schichten können zusätzlich übliche Additive, wie Neutralisationsmittel, Stabilisatoren, Antiblockmittel, Gleitmittel und andere Füllstoffe, enthalten. Sie werden zweckmässig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Russ, Titandioxid, Kaolin oder vernetzte Polymerpartikel, z.B. Polystyrol- oder Acrylat-Partikel.

Als Additive können auch Mischungen von zwei und mehreren verschiedenen Antiblockmitteln oder Mischungen von Antiblockmitteln gleicher Zusammensetzung, aber unterschiedlicher Partikelgrösse gewählt werden. Die Partikel können den Polymeren der einzelnen Schichten der Folie in den jeweils vorteilhaften Konzentrationen direkt oder über Masterbatche bei der Extrusion zugegeben werden. Als besonders geeignet haben sich Antiblockmittel-Konzentrationen von 0 bis 10 Gew.-% erwiesen (bezogen auf das Gewicht der jeweiligen Schicht). Eine detaillierte Beschreibung der Antiblockmittel findet sich beispielsweise in der EP-A-0 602 964.

Zu Verbesserung des Weissgrades der Folie kann die COC-haltige Schicht oder mindestens eine der weiteren Schichten ein Pigment enthalten. Hierbei hat es sich als besonders günstig erwiesen, als zusätzliche Additive Bariumsulfat in einer mittlere Teilchengröße von 0,3-0,8 µm, vorzugsweise 0,4-0,7 µm oder Titandioxid mit einer mittleren Teilchengröße von 0,05-1µm, auszuwählen. Die Folie erhält hierdurch ein brillantes, weisses Aussehen. Im allgemeinen enthält die COC-haltige Schicht und/oder eine weitere Schicht in diesen Ausführungsformen 1 bis 25 Gew.-%, vorzugsweise über 1 bis 20 Gew.-%, und insbesondere 1 bis 15 Gew.-% Pigmente jeweils bezogen auf das Gewicht der Schicht.

Die Gesamtdicke der Folie kann innerhalb weiter Grenzen variieren und richtet sich nach dem beabsichtigten Verwendungszweck. Die bevorzugten Ausführungsformen der erfindungsgemässen Folie haben Gesamtdicken von 4 bis 200 µm, wobei 8 bis 150 µm, insbesondere 10 bis 100 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die angegebenen Werte beziehen sich jeweils auf eine Zwischenschicht. Die Dicke der Deckschicht/en wird unabhängig von den anderen Schichten gewählt und liegt bevorzugt im Bereich von 0,1 bis 5 µm, insbesondere 0,2 bis 3 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die verschiedenen vorstehend beschriebenen Ausführungsformen der erfindungsgemäßen Folie können als Substrat für eine anschließende Metallisierung verwendet werden. Hierbei haben sich insbesondere solche Ausführungsformen als besonders vorteilhaft erwiesen, welche auf der Oberfläche einer COC-haltigen Schicht metallisiert werden, d.h einschichtige Ausführungsformen und solche mit einer entsprechenden COC haltigen Schicht als Deckschicht. Es wurde gefunden daß Schichten aus COC und Polymer aus mindestens einer Hydroxycarbonsäure eine besonders gute Metallhaftung aufweisen.

Des weiteren kann die beschriebene opake Folie als Etikettenfolie eingesetzt werden, sowie als Verpackungsfolie zur Verpackung von Lebensmitteln und Gebrauchsgütem. Auf Grund vorteilhafter Dreheinschlagseigenschaften, die an sich von PLA Folie bekannt sind und die durch den Zusatz des vakuolenbildenden C0Cs nicht beeinträchtigt werden, eignet sich die Folie auch sehr gut für Dreheinschlagsverpackungen für Bonbons, Tampons und ähnliches.

Die Erfindung betrifft weiterhin ein Verfahren zur Herstellung der erfindungsgemässen Folie nach dem an sich bekannten Extrusions- oder Koextrusionsverfahren. Im Rahmen dieses Verfahrens wird so vorgegangen, dass die der einschichtigen Folie oder die den Schichten der Folie entsprechende Schmelze/n durch eine Flachdüse extrudiert/koextrudiert wird/werden, die so erhaltene Folie zur Verfestigung auf einer oder mehreren Walze/n abgezogen wird, die Folie anschliessend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im allgemeinen sequentiell durchgeführt. Dabei wird vorzugsweise erst in Längsrichtung (d.h. in Maschinenrichtung, =MD-Richtung) und anschliessend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell laufenden Walzen. Zum Querverstrecken benutzt man allgemein einen entsprechenden Kluppenrahmen. Die weitere Beschreibung der Folienherstellung erfolgt am Beispiel einer Flachfolienextrusion mit anschließender sequentialer Streckung.

Die Schmelze/n werden durch eine Flachdüse (Breitschlitzdüse) gepreßt, und die ausgepreßte Folie wird auf einer oder mehreren Abzugswalzen bei einer Temperatur von 10 bis 100°C, vorzugsweise 30 bis 80°C, abgezogen, wobei sie abkühlt und sich verfestigt.

Die so erhaltene Folie wird dann längs und quer zur Extrusionsrichtung gestreckt. Das Längsstrecken wird man vorzugsweise bei einer Temperatur von 40 bis 120°C, vorzugsweise 50 bis 80°C zweckmäßigerweise mit Hilfe zweier entsprechend dem angestrebten Streckverhältnis verschieden schnell laufender Walzen durchführen und das Querstrecken vorzugsweise bei einer Temperatur von 50 bis 150°C, vorzugsweise 70 bis 100°C mit Hilfe eines entsprechenden Kluppenrahmens. Die Längsstreckverhältnisse liegen im Bereich von 1,5 bis 8 vorzugsweise 2 bis 5,5. Die Querstreckverhältnisse liegen im Bereich von 3 bis 10, vorzugsweise 4 bis 7.

An die Streckung der Folie schließt sich ihre Thermofixierung (Wärmebehandlung) an, wobei die Folie etwa 0,1 bis 10 s lang bei einer Temperatur von 60 bis 150°C gehalten wird. Anschließend wird die Folie in üblicher Weise mit einer Aufwickeleinrichtung aufgewickelt.

Gegebenenfalls kann zur Einstellung weiterer Eigenschaften die Folie beschichtet werden. Typische Beschichtungen sind haftvermittelnde, antistatisch, schlupfverbessernd oder dehäsiv wirkende Schichten. Gegebenenfalls können diese zusätzlichen Schichten über- in-line coating mittels wässriger Dispersionen vor der Querverstreckung oder off-line aufgetragen werden.

Die erfindungsgemässe Folie zeichnet sich durch einen guten Weissgrad und durch eine gute Opazität aus. Sie eignet sich hervorragend zur Verpackung von licht- und/oder luftempfindlichen Nahrungs- und Genussmitteln. Daneben ist sie auch für den Einsatz im industriellen Bereich, z.B. bei der Herstellung von Prägefolien oder als Etikettenfolie, geeignet. Es wurde gefunden, daß durch den Zusatz von COC vakuolenartige Hohlräume in der Folie erzeugt werden, welche die Dichte der Folie, gegenüber der entsprechenden Dichte der Rohstoffe, reduzieren. Die Dichte liegt erfindungsgemäß im Bereich von 0,6 bis 1 g/cm³.

Es wurde zusätzlich gefunden, daß der Zusatz von COC die Verstreckbarkeit der Folie verbessert. Gegenüber reinen PLA-Folien, welche keine weiteren Zusätze enthalten konnten die Längs- und Querstreckfaktoren erheblich erhöht werden.

Zur Charakterisierung der Rohstoffe und der Folien wurden die folgenden Messwerte benutzt:
Weissgrad und Opazität
   Die Bestimmung des Weissgrades und der Opazität erfolgt mit Hilfe des elektrischen Remissionsphotometers "ELREPHO" der Firma Zeiss, Oberkochem (DE), Normlichtart C, 2 DEG Normalbeobachter. Die Opazität wird nach DIN 53 146 bestimmt. Der Weissgrad wird als WG = RY + 3RZ - 3RX definiert. WG = Weissgrad, Rx, Ry, Rz = entsprechende Reflexionsfaktoren bei Einsatz des Y-, Z-und X-Farbmessfilters. Als Weissstandard wir ein Pressling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.
Lichtdurchlässigkeit
   Die Lichtdurchlässigkeit wird in Anlehnung an ASTM-D 1033-77 gemessen.
Glasübergangstemperatur
   Die Glasübergangstemperatur Tg wurde anhand von Folienproben mit Hilfe der DSC (Differential Scanning Calorimetry) bestimmt (DIN 73 765). Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang Tg ermittelt. Die Proben zeigten vielfach eine Enthalpierelaxation (ein Peak) zu Beginn des stufenförmigen Glasübergangs. Als Tg wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

Die Erfindung wird nachstehend an Hand von Ausführungsbeispielen erläutert

### Beispiel 1:

Es wurde durch Extrusion und anschließende stufenweise Orientierung in Längs- und Querrichtung eine opake einschichtige PLA-Folie mit einer Dicke von 30 µm hergestellt. Diese Schicht war zu ca. 95 Gew.-% aus einer Polymilchsäure mit einem Schmelzpunkt von 135°C und einem Schmelzflußindex von ca. 3 g/10min und einer Glastemperatur von 60 °C und ca. 5 Gew.-% COC (Ticona Topas 6013) mit einem Tg von 140°C aufgebaut. Die Schicht enthielt zusätzlich Stabilisatoren und Neutralisationsmittel in üblichen Mengen. Die Herstellbedingungen in den einzelnen Verfahrensschritten waren:

| | | |
|---|---|---|
| Extrusion: | Temperaturen | 170 - 200°C |
| | Temperatur der Abzugswalze: | 60°C |
| Längsstreckung: | Temperatur. | 68 °C |
| | Längsstreckverhältnis: | 4,0 |
| Querstreckung: | Temperatur. | 88 °C |
| | Querstreckverhältnis (effektiv): | 5,5 |
| Fixierung: | Temperatur: | 75 °C |
| | Konvergenz: | 5% |

Auf diese Weise wurde eine opake Folie mit charakteristischem perlmuttartigem Glanz und einer reduzierten Dichte von ca. 0,75 g/cm³ erhalten.

### Beispiel 2:

Es wurde eine einschichtige Folie wie in Beispiel 1 beschrieben hergestellt. Dabei wurde der Gehalt an COC auf ca. 3 Gew.-% erniedrigt und der Gehalt an PLA entsprechend erhöht. Bei den Verfahrensbedingungen wurde der Längstreckfaktor auf 3,5 verringert. Auf diese Weise wurde ebenfalls eine opake Folie mit charakteristischem perlmuttartigem Glanz und einer reduzierten Dichte von ca. 0,8 g/cm³ erhalten.

### Beispiel 3

Es wurde eine Folie wie in Beispiel 1 beschrieben hergestellt. Im Unterschied zu Beispiel 1 wurden auf die COC-haltige Schicht beidseitig Deckschichten aus PLA aufgebracht. Die Deckschichten waren aus einer Polymilchsäure mit einem Schmelzflußindex von ca. 2,6 g/10 min aufgebaut. Die Verfahrensbedingungen aus Beispiel 1 wurden nicht verändert. Auf diese Weise wurde eine symmetrische dreischichtige opake PLA-Folie erhalten die Dichte dieser Folie betrug 0,77g/ cm³

### Vergleichsbeispiel 1

Es wurde eine Folie wie in Beispiel 1 beschrieben hergestellt. Im Unterschied zu Beispiel 1 enthielt die Folie kein COC und bestand zu ca. 100 Gew.% aus PLA. Die Verfahrensbedingungen mußten geändert werden. Die Längsstreckung konnte nur noch mit einem Längsstreckfaktor von 2,5 durchgeführt werden. Höhere Längsstreckfaktoren führten zu Abrissen.

### Vergleichsbeispiel 2

Es wurde eine Folie wie in Beispiel 1 beschrieben hergestellt. Im Unterschied zu Beispiel 1 wurde an Stelle des COC 5 Gew.-% eines CaCO₃ mit einer mittleren Teilchengröße von 3 µm eingesetzt. Diese Zusammensetzung konnte in Längsrichtung maximal um den Faktor 2,5 verstreckt werden. Auch hierbei kam es bei höheren Längsstreckfaktoren zu Abrissen. Diese Folie zeigte kein opakes Aussehen. Es wurde lediglich eine gewisse milchige Eintrübung erzielt. Die Dichte der Folie betrug 1,25g/cm³ und war somit nicht reduziert.

## Patentansprüche

1. Opake biaxial orientierte Folie aus mindestens einer COC-haltigen Schicht, **dadurch gekennzeichnet, daß** diese Schicht mindestens ein Polymeres I aus mindestens einer aliphatischen Hydroxycarbonsäure und 0,5 bis 30 Gew-%, bezogen auf die Schicht, ein Cycloolefincopolymeres (COC)mit einer Glasübergangstemperatur im Bereich von 70 bis 270 °C enthält, wobei die Folie vakuolenartige Hohlräume und eine Dichte von weniger als 1,25g/cm³ aufweist.

2. Folie nach Anspruch 1, **dadurch gekennzeichnet, dass** das Cycloolefincopolymer (COC) Polynorbornen, Polydimethyloctahydronaphthalin, Polycyclopenten oder Poly(5-methyl)norbomen ist

3. Folie nach Anspruch 1 oder 2, **dadurch gekennzeichnet, daß** das Cyciootefincopolymers (COC) eine Glasübergangstemperatur im Bereich von 80 bis 200 °C aufweist.

4. Folie nach einem oder mehreren der Ansprüche 1 bis 3, **dadurch gekennzeichnet, dass** das Polymere I aus mindestens einer Hydroxycarbonsäure aus aliphatischen Hydroxycarbonsäureeinheüen, vorzugsweise aus Milchsäureeinheiten, aufgebaut ist.

5. Folie nach einem oder mehreren der Ansprüche 1 bis 4, **dadurch gekennzeichnet, dass** das Polymere I aus aliphatischen Hydroxycarbvnsäureeinheiten, vorzugsweise aus Milchsäureeinheiten, einen Schmelzpunkt von 110 - 170°C und einen Schmelzflußindex von 1-50 g/10min. hat.

6. Folie nach einem oder mehreren der Ansprüche 1 bis 5, **dadurch gekennzeichnet, dass** die COC-hahige Schicht 1 bis 25 Gew.-% Pigmente, vorzugsweise TiO₂ enthält, jeweils bezogen auf das Gewicht der Schicht.

7. Folie nach einem oder mehreren der Ansprüche 1 bis 6, **dadurch gekennzeichnet, dass** die COC-haltigen Schicht die Basisschicht der Folie bildet und zusätzlich auf dieser Basisschicht ein oder beidseitig Deckschichten aufgebracht ist/sind, welche aus mindestens einem Polymeren I aus mindestens einer Hydroxycarbonsäure, aufgebaut ist

8. Folie nach Anspruch 7, **dadurch gekennzeichnet, dass** zwischen der COC-haltigen Basisschicht und der oder den Deckschicht/en ein oder beidseitig Zwischenschicht/en angeordnet ist/sind.

9. Folie nach einem oder mehreren der Ansprüche 1 bis 8, **dadurch gekennzeichnet, dass** die Folie einschichtig ist und aus der COC-haltigen Schicht besteht.

10. Folie nach einem der Ansprüche 1 bis 9, **dadurch gekennzeichnet, dass** die COC-haltigen Schicht eine Deckschicht oder eine Zwischenschicht der Folie bildet

11. Folie nach einem oder mehreren der Ansprüche 1 bis 10, **dadurch gekennzeichnet, dass** die Folie beidseitig COC-haltigen Zwischenschichten aufweist.

12. Folie nach einem oder mehreren der Ansprüche 1 bis 11, **dadurch gekennzeichnet, dass** die Folie einen Dichte von 0,6 bis 1 g/cm3, aufweist

13. Folie nach einem oder mehreren der Ansprüche 1 bis 11, **dadurch gekennzeichnet, dass** die COC-haltige Schicht eine Deckschicht der Folie bildet und die äußere Oberfläche dieser Schicht metallisiert ist.

14. Verwendung einer Folie nach einem der Ansprüche 1 bis 13 als Verpackungsfolie, als Dreheinschlagsfolie oder als Etikettenfolie

15. Verfahren zur Herstellung einer Folie nach einem oder mehreren der Ansprüche 1 bis 12, **dadurch gekennzeichnet, daß** man eine Schmelze aus PLA und COC extrudiert, wobei diese Schmelzetemperatur mindestens 10°C über der Tg des COC liegt und die Schmelze zu einer Vorfolie abkühlt, die abgekühlte Vorfolie bei einer Temperatur von 50 bis 70°C im Maschinenlaufrichtung verstreckt wird und der Längsstreckfaktor im Bereich von 4 bis 6 liegt.

16. Verfahren nach Anspruch 13, **dadurch gekennzeichnet, daß** die Folie nach der Längsstreckung bei einer Temperatur von 70 bis 100°C quergestreckt wird und der Querstreckfaktor im Bereich von 5 bis 8 liegt

## Claims

1. An opaque biaxially oriented film comprising at least one COC-containing layer, **characterized in that** this layer contains at least one polymer I made from at least one aliphatic hydroxycarboxylic acid and from 0.5 to 30% by weight, based on the layer, of a cycloolefin copolymer (COC) having a glass transition temperature in the range from 70 to 270° C, with the film having vacuole-like cavities and a density of less than 1.25 g/cm³.

2. The film according to claim 1, **characterized in that** the cycloolefin copolymer (COC) is polynorbornene, polydimethyloctahydronaphthalene, polycyclopentene or poly(5-methyl)norbornene.

3. The film according to claim 1 or 2, **characterized in that** the cycloolefin copolymer (COC) has a glass transition temperature in the range from 80 to 200° C.

4. The film according to one or more of claims 1 to 3, **characterized in that** the polymer I is built up from at least one hydroxycarboxylic acid comprising aliphatic hydroxycarboxylic acid units, preferably from lactic acid units.

5. The film according to one or more of claims 1 to 4, **characterized in that** the polymer I made from aliphatic hydroxycarboxylic acid units, preferably from lactic acid units, has a melting point of 110-170° C and a melt flow index of 1-50 g/10 min.

6. The film according to one or more of claims 1 to 5, **characterized in that** the COC-containing layer contains 1 to 25% by weight of pigments, preferably TiO2, based on the weight of the layer, in each case.

7. The film according to one or more of claims 1 to 6, **characterized in that** the COC-containing layer forms the base layer of the film, and, in addition, covering layers built up from at least one polymer I made from at least one hydroxycarboxylic acid is applied to one or both sides of this base layer.

8. The film according to claim 7, **characterized in that** an interlayer/s is/are arranged on one or both sides between the COC-containing base layer and the covering layer/s.

9. The film according to one or more of claims 1 to 8, **characterized in that** the film is single-layered and consists of the COC-containing layer.

10. The film according to one of claims 1 to 9, **characterized in that** the COC-containing layer forms a covering layer or an interlayer of the film.

11. The film according to one or more of claims 1 to 10, **characterized in that** the film has COC-containing interlayers on both sides.

12. The film according to one or more of claims 1 to 11, **characterized in that** the film has a density of 0.6 to 1 g/cm3.

13. The film according to one or more of claims 1 to 11, **characterized in that** the COC-containing layer forms a covering layer of the film and the outer surface of this layer is metallized.

14. Use of a polymer film according to one of claims 1 to 13 as packaging film, as twist-wrap film or as labeling film.

15. The process for the production of a film according to one or more of claims 1 to 12, **characterized in that** a melt of FLA and COC is extruded, with this melt temperature being at least 10° C above the Tg of the COC and where the melt cools to form a pre-film, the cooled pre-film is stretched in the machine direction at a temperature of from 50 to 70° C, and the longitudinal stretching factor is in the range from 4 to 6.

16. The process according to claim 13, **characterized in that** the film is stretched transversely at a temperature of from 70 to 100° C subsequent to the longitudinal stretching, and the transverse stretching factor is in the range from 5 to 8.

## Revendications

1. Film opaque orienté bixaxialement et constitué d'au moins une couche contenant du COC, **caractérisé en ce que** ladite couche contient au moins un polymère I constitué d'un acide hydroxycarboxylique aliphatique ainsi que de 0,5 à 30 % en poids, par rapport à ladite couche, d'un copolymère cyclooléfinique (COC) ayant une température de transition vitreuse comprise entre 70 et 270 °C, ledit film présentant des cavités ressemblant à des vacuoles et une densité de moins de 1,25 g/cm².

2. Film selon la revendication 1, **caractérisé en ce que** le copolymère cyclooléfinique (COC) est du polynorbornène, du polydiméthyloctahydronaphtalène, du polycyclopentène ou du poly(5-méthyl)norbornène.

3. Film selon les revendications 1 ou 2, **caractérisé en ce que** le copolymère cyclooléfinique (COC) présente une température de transition vitreuse comprise entre 80 et 200 °C.

4. Film selon une ou plusieurs des revendications 1 à 3, **caractérisé en ce que** le polymère I est constitué d'au moins un acide hydroxycarboxylique composé d'unités d'acides hydroxycarboxyliques aliphatiques, de préférence d'unités d'acide lactique.

5. Film selon une ou plusieurs des revendications 1 à 4, **caractérisé en ce que** le polymère I constitué d'unités d'acides hydroxycarboxyliques aliphatiques, de préférence d'unités d'acide lactique présente un point de fusion compris entre 110 et 170 °C et un indice de fluidité à chaud compris entre 1 et 50 g/10 min.

6. Film selon une ou plusieurs des revendications 1 à 5, **caractérisé en ce que** la couche contenant du COC contient 1 à 25 % en poids, par rapport au poids de la couche respective, de pigments, de préférence de TiO₂.

7. Film selon une ou plusieurs des revendications 1 à 6, **caractérisé en ce que** la couche contenant du COC constitue la couche de base du film et que ladite couche de base est revêtue, sur une de ses faces ou sur les deux, de couches de recouvrement constituées d'au moins un polymère I composé d'au moins un acide hydroxycarboxylique.

8. Film selon la revendication 7, **caractérisé en ce que** des couches intermédiaires sont disposées, sur une face ou sur les deux, entre la couche de base contenant du COC et la ou les couche(s) de recouvrement.

9. Film selon une ou plusieurs des revendications 1 à 6, **caractérisé en ce que** le film comporte une seule couche et qu'il est constitué de la couche contenant du COC.

10. Film selon une ou plusieurs des revendications 1 à 9, **caractérisé en ce que** la couche contenant du COC constitue une couche de recouvrement ou une couche intermédiaire du film.

11. Film selon une ou plusieurs des revendications 1 à 10, **caractérisé en ce que** le film comporte sur ses deux faces des couches intermédiaires contenant du COC.

12. Film selon une ou plusieurs des revendications 1 à 11, **caractérisé en ce que** le film présente une densité comprise entre 0,6 et 1 g/cm³.

13. Film selon une ou plusieurs des revendications 1 à 11, **caractérisé en ce que** la couche contenant du COC constitue une couche de recouvrement du film et que la surface extérieure de ladite couche est métallisée.

14. Utilisation d'un film selon une des revendications 1 à 13 comme film d'emballage, film pour le conditionnement par papillotage et film pour étiquettes.

15. Procédé de fabrication d'un film selon une des revendications 1 à 12, **caractérisé en ce que** l'on extrude une fonte de PLA et de COC, la température de fusion de ladite fonte étant supérieure d'au moins 10 °C à la Tg du COC, pour ainsi obtenir, en refroidissant la fonte, un pré-film et ensuite orienter le pré-film dans le sens de l'avancement de la machine, la température étant comprise entre 50 et 70 °C et le facteur d'orientation longitudinale étant compris entre 4 et 6.

16. Procédé selon la revendication 13, **caractérisé en ce que** le film, après avoir été orienté longitudinalement, est orienté transversalement, la température étant comprise entre 70 et 100 °C et le facteur d'orientation transversale étant compris entre 5 et 8.
